# EUROPÄISCHE PATENTSCHRIFT

(11) **EP 0 555 259 B1**
(45) Veröffentlichungstag und Bekanntmachung des Hinweises auf die Patenterteilung: **10.01.1996**
(21) Anmeldenummer: 91918243.6
(22) Anmeldetag: 18.10.1991
(51) Int. Cl.: F16K 1/44

(54) **VERFAHREN UND STEUEREINRICHTUNGEN ZUR SITZREINIGUNG VON DOPPELSITZVENTILEN**
PROCESSES AND CONTROL DEVICES FOR CLEANING THE SEATS OF DOUBLE-SEATED VALVES
PROCEDES ET DISPOSITIFS DE COMMANDE DU NETTOYAGE DES SIEGES DE SOUPAPES A DOUBLE SIEGE

(30) Priorität: 03.11.1990 DE 4035017
(43) Veröffentlichungstag der Anmeldung: 18.08.1993
(73) Patentinhaber: OTTO TUCHENHAGEN GmbH & Co. KG, D-21514 Büchen (DE)
(72) Erfinder: MIETH, Hans, Otto, D-2058 Schnakenbek (DE)
(74) Vertreter: DIEHL GLAESER HILTL & PARTNER
(86) Internationale Anmeldenummer: EP9101984
(87) Internationale Veröffentlichungsnummer: WO9208070

(56) Entgegenhaltungen:
- EP-A- 0 208 126
- DE-A- 3 108 973
- DE-A- 3 133 273
- DE-U- 8 003 805

## Beschreibung

Die Erfindung betrifft ein Verfahren zur Sitzreinigung von Doppelsitzventilen gemäß dem Oberbegriff der unabhängigen Ansprüche 1 bis 3 und ein Doppelsitzventil mit einer Steuereinrichtung zur Durchführung des Verfahrens nach dem Oberbegriff der Ansprüche 5, 6 oder 8.

Es sind eine Reihe von Steuereinrichtungen der einleitend gekennzeichneten Gattung bekannt (DE 80 03 805 U1, DE 31 08 973 C2 und DE 31 33 273 C2), die ohne Ausnahme im wesentlichen das gleiche Funktionsprinzip aufweisen, nach dem nämlich der Antriebskolben der Schließgliedverstellstange des anzulüftenden Schließgliedes innerhalb der Einzelverstelleinrichtung gegen einen Hubbegrenzungsanschlag gefahren wird. Dabei kann in der Regel die Anschlagposition des Antriebskolbens innerhalb der Einzelverstelleinrichtung durch verschiebliche Anschläge in Grenzen verändert werden (DE 80 03 805 U1), oder aber die Anschlagposition ist relativ zur Schließgliedverstellstange auf dieser veränderbar (DE 31 08 973 C2). Bei der aus der DE 80 03 805 U1 bekannten Steuereinrichtung sind die Einzelverstelleinrichtungen in der Hauptverstelleinrichtung integriert, und zwar derart, daß die eine an dem oberen und die andere an dem unteren Ende der Hauptverstelleinrichtung Aufnahme findet.

Bei der aus der DE 31 08 973 C2 bekannten Steuereinrichtung sind die beiden Schließgliedverstellstangen durch die Hauptverstelleinrichtung nach oben herausgeführt, und sie enden in einem beiden Einzelverstelleinrichtungen gemeinsamen Steuerzylinder. Schließlich zeigt die DE 31 33 273 C2 eine Steuereinrichtung, bei der die Einzelverstelleinrichtungen für beide Schließglieder unterhalb der ausschließlich den Vollhub für die volle Offenstellung erzeugenden Hauptverstelleinrichtung als eigenständige Verstelleinrichtung ohne Änderung der angrenzenden Standardbauteile additiv zwischen Hauptverstelleinrichtung und Laternengehäuse eingefügt sind.

Die Komplexität der bekannten Doppelsitzventile, bei denen eine Sitzreinigung durchgeführt werden kann, läßt die Schwierigkeiten erahnen, die bei der Voreinstellung der Anschlagpositionen für die Antriebskolben der Einzelverstelleinrichtungen auftreten. Einmal ist es die Summe der Fertigungstoleranzen einer Vielzahl von relevanten Bauteilen, die in jedem Falle die individuelle Justierung der Einzelhübe erforderlich macht, wobei jeweils auch immer zu überprüfen ist, ob im Rahmen der möglichen Teilhubverstellung die grundsätzliche Funktion des Doppelsitzventils noch sichergestellt ist. Es muß nämlich in jedem Falle verhindert werden, daß beim Anlüften des einen Schließgliedes zum Zwecke seiner Sitzreinigung nicht auch das andere Schließglied in eine Teiloffenstellung verbracht wird. Zum anderen weisen die mit den bekannten Steuereinrichtungen durchführbaren Sitzreinigungsverfahren einen prinzipiellen Nachteil auf, der aus der stationären Beibehaltung einer einmal erreichten Teiloffenstellung des jeweiligen Schließgliedes resultiert, bis der Sitzreinigungsvorgang über ein extern an das Doppelsitzventil herangeführtes Steuersignal beendet wird. Da der Antriebskolben der Einzelverstelleinrichtung gegen eine Anschlagposition gefahren wird, wie vorstehend bereits erwähnt, steht über die gesamte Zeitdauer der jeweiligen Sitzreinigung ein unveränderlicher, mehr oder weniger großer Öffnungsquerschnitt für das Reinigungsmittel zur Verfügung. Die Druck- und Temperaturbedingungen, denen Doppelsitzventile der einleitend gekennzeichneten Gattung im praktischen Einsatz unterliegen, können die bereitgestellten Öffnungsquerschnitte entweder verringern oder vergrößern. Eine Verringerung kann eine unzureichende Sitzreinigung bewirken, eine Vergrößerung ergibt in jedem Falle einen höheren Reinigungsmittelverbrauch, ohne daß dadurch zwangsläufig auch die Reinigungswirkung gesteigert wird. Der letztgenannte Aspekt erfordert, insbesondere bei einer Vielzahl zeitlich parallel zu reinigender Doppelsitzventile beispielsweise im Rahmen eines Ventilblockes, die Bereitstellung einer zu hohen und damit unwirtschaftlichen Reinigungsleistung, ohne daß dadurch wenigstens eine Intensivierung des Sitzreinigungsvorganges oder eine für alle Doppelsitzventile gleichintensive Sitzreinigung erreicht würde.

Im Zusammenhang mit einem bekannten Verfahren zur Verwirklichung eines leckagefrei schaltenden und sitzreinigungsfähigen Doppelsitzventils (EP 0 208 126 B1) , bei welchem ein schieberartig ausgebildetes Schließglied zur Reinigung seines Sitzes um einen Teilhub in Richtung des ggf. produktführenden Ventilgehäuseteiles verschoben wird, wobei gleichzeitig das andere, als Sitzteller ausgebildete Schließglied gegenüber dem ggf. produktbeaufschlagten um einen gleich-oder gegensinnigen Teilhub verschoben wird, wurde zwar vorgeschlagen, den Sitzreinigungsvorgang durch mehrmals sich wiederholende Teilhubbewegungen der Schließglieder durchzuführen. Diese Maßnahme hatte in erster Linie den Zweck, die Sitzfläche des schieberartig ausgebildeten Schließgliedes freizulegen und dabei durch mehrmaliges Abwischen einen Reinigungsmittelfilm auch zwischen Sitzdichtung und Sitzfläche auszubringen. Allein durch einen einmaligen Öffnungshub wäre der kritische Bereich zwischen Sitzdichtung und Sitzfläche des ggf. produktbeaufschlagten schieberartig ausgebildeten Schließgliedes nicht zuverlässig zu reinigen. Aber auch bei diesem bekannten Verfahren werden die Antriebskolben der Einzelverstelleinrichtungen gegen eine feste Anschlagposition gefahren, die so lange beibehalten wird, bis durch ein von außerhalb des Doppelsitzventils herangeführtes Steuersignal die Anlüftstellung, über deren gesamte Zeitdauer der volle Öffnungsquerschnitt für den Reinigungsmittelfluß zur Verfügung steht, beendet wird.

Der vorliegenden Erfindung liegt die Aufgabe zugrunde, bei einem Verfahren zur Sitzreinigung von Doppelsitzventilen der einleitend gekennzeichneten Gattung die Wirtschaftlichkeit zu erhöhen, die Reinigungswirkung zu verbessern und dabei auch die Einrichtungen zur Teilhuberzeugung zu vereinfachen.

Diese Aufgabe wird durch Anwendung der Kennzeichenmerkmale des Anspruchs 1 oder 2 oder 3 gelöst. Eine vorteilhafte Ausgestaltung des Verfahrens gemäß Anspruch 2 ist Gegenstand des Anspruchs 4. Doppelsitzventile mit einer Steuereinrichtung zur Durchführung der erfindungsgemäßen Verfahren ergeben sich durch die Ausgestaltung mit den Kennzeichenmerkmalen der Nebenansprüche 5, 6 und 8, deren vorteilhafte Ausführungsformen Gegenstand der untergeordneten Ansprüche 7, 9 und 10 sind.

Die Vorteile der vorgeschlagenen Verfahren und der Doppelsitzventile mit einer Steuereinrichtung zu ihrer Durchführung sind augenfällig. Da die Richtungsumkehr des Schließgliedes, die Umsteuerung von seiner Öffnungs- zur Schließbewegung und umgekehrt, periodisch erfolgt, stellt sich über den sich von einem Mindest- bis zu einem Höchstbetrag stetig verändernden Durchtrittsquerschnitt zwischen Schließglied und zugeordnetem Ventilsitz eine schwellende Reinigungsmittelströmung ein, die eine besonders intensive Reinigungswirkung entfacht. Mit zunehmender Strömungsgeschwindigkeit im enger werdenden Spalt wird die mechanische Wirkung der Strömung gesteigert, während bei sich erweiterndem Öffnungsquerschnitt und der damit verbundenen Reduzierung der Strömungsgeschwindigkeit Ablösungserscheinungen und Wirbelströmungen verstärkt auftreten, die ein Ablösen und Austragen von abgelösten Verschmutzungen begünstigen.

Hinsichtlich der Umsteuerung von der Öffnungs- zur Schließbewegung werden drei voneinander unabhängige Lösungen vorgeschlagen. Einmal kann die Umsteuerung allein zeitabhängig erfolgen, wobei vorgesehen ist, daß die Steuersignale entweder durch eine außerhalb des Doppelsitzventils angeordnete Hauptsteuerung oder durch eine im oder am Doppelsitzventil angeordnete, allein diesem zugeordnete Steuerung generiert werden. Die hubabhängige Lösung besteht darin, daß entweder bei Erreichen eines bestimmten Hubes die Umsteuerung des Schließgliedes eingeleitet wird oder daß die Steuerungssignale für die Umsteuerung mittelbar aus einem dem Hub-Zeit-Verlauf entsprechenden Verlauf einer erfaßbaren physikalischen Größe abgeleitet werden. Dies kann beispielsweise der Druck des Druckmittels für die Einzelverstelleinrichtungen zur Erzeugung der Teiloffenstellung sein, der einen Druckaufnehmer oder Druckschalter beaufschlagt und über diese die Steuersignale auslöst. Die dritte Lösungs möglichkeit sieht vor, die Richtungsumkehr des Schließgliedes vom Reinigungsmittelfluß abhängig zu machen, und zwar wird die Schließbewegung eingeleitet, wenn ein Reinigungsmittelfluß durch einen Durchtrittsspalt festgestellt wird, während die Öffnungsbewegung angesteuert wird, wenn der Reinigungsmittelfluß ausbleibt. Die für die zeitliche Abfolge periodisch sich einander ablösenden Öffnungs- und Schließbewegungen des Schließgliedes und die zur Richtungsumkehr erforderlichen Steuersignale werden bei den beiden letzgenannten Lösungsverfahren (hub- und ergebnis- bzw. reinigungsmittelgesteuerte Umsteuerung) sozusagen aus der vorgeschlagenen Steuereinrichtung heraus generiert und nicht etwa durch extern aus der Umgebung des Doppelsitzventils herangeführte Steuersignale. Dies ist beispielsweise bei der zeitabhängigen Umsteuerung der Fall, wenn die erforderlichen Steuersignale durch eine außerhalb des Doppelsitzventils angeordnete Hauptsteuerung ausgegeben werden. Ein weiterer wesentlicher Vorteil der vorgeschlagenen Maßnahmen besteht darin, daß der gesamte Steuerungsablauf ohne mechanische Hubbegrenzungen erfolgen kann, so daß auch keine beweglichen, Einstellungen erforderden Anschläge zur Sicherstellung der Anschlagposition des jeweiligen Antriebskolbens der Einzelverstelleinrichtung mehr erforderlich sind.

Gleichwohl können die neuen Verfahren noch mit Vorteil durchgeführt werden, wenn die Doppelsitzventile mit einer Steuereinrichtung zur Durchführung der Verfahren, wie dies eine vorteilhafte Ausgestaltung vorsieht, mit einer mechanischen Hubbegrenzung ausgestattet sind. Diese mechanische Hubbegrenzung kann einerseits einen Sicherheitsanschlag für das jeweilige Schließglied bilden, der verhindert, daß beim Ausfall oder Defekt der Steuereinrichtung das Doppelsitzventil im Zuge der Sitzreinigung in seine volle Offenstellung überführt wird. Andererseits kann die Hubbegrenzung planmäßig dazu benutzt werden, den Endaus schlag der Öffnungsbewegung des Schließgliedes, unabhängig davon, wie seine Umsteuerung von der Öffnungs- zur Schließbewegung und umgekehrt erfolgt, mechanisch zu begrenzen.

Neben der vorgenannten strömungsmechanisch bedingten Intensivierung des Sitzreinigungsvorganges ergibt sich auch eine verbesserte Reinigung der kritischen Bereiche zwischen Sitzdichtung und Schließglied dadurch, daß infolge der periodischen Öffnungs- und Schließbewegungen des Schließgliedes die Sitzdichtung bei Einwirkung des Reinigungsmittels wiederholt deformiert und gewalkt wird, was Mikrobewegungen der Dichtung gegenüber den sie begrenzenden Schließgliedflächen zur Folge hat.

Darüber hinaus liegt es in der Natur der Sache, daß ein sich zwischen einem minimalen und einem maximalen Wert periodisch verändernder Durchtrittsquerschnitt zwischen Schließglied und zugeordnetem Ventilsitz über die gesamte Zeitspanne einer Sitzreinigung weniger Reinigungsmittel durchsetzt, als ein über die gesamte Zeitdauer stationär auf den maximalen Durchtrittsquerschnitt geöffneter Teilhub. Dieser Vorteil der vorgeschlagenen Verfahren wird dann besonders augenfällig, wenn eine Vielzahl von Doppelsitzventilen zeitlich parallel in ihrem Sitzbereich gereinigt werden sollen, weil man dann davon ausgehen kann, daß die maximalen Durchsatzleistungen für das einzelne Ventil bei kurzzeitig voll geöffnetem Durchtrittquerschnitt zeitlich statistisch verteilt auftreten, so daß mit großer Wahrscheinlichkeit niemals der Fall eintreten wird, daß alle zeitlich parallel zu reinigenden Doppelsitzventile zum gleichen Zeitpunkt den maximal möglichen Reinigungsmittelfluß abfordern. Dadurch bleibt der Druckverlust in der die hintereinander geschalteten Ventile verbindenden Leitung begrenzt, das heißt das erste und das letzte der in Reihe geschalteten Ventile erfahren eine etwa gleichintensive Reinigung.

Gemäß einer vorteilhaften Ausgestaltung des Verfahrens mit hubabhängiger Umsteuerung ist vorgesehen, daß der Hub-Zeit-Verlauf der Öffnungs- und Schließbewegung des Schließgliedes wahlweise und unabhängig voneinander eingestellt wird. Durch diese Maßnahme nimmt man einerseits Einfluß auf die strömungsmechanischen Vorgänge innerhalb des Durchtrittsspaltes und andererseits kann dadurch der effektiv wirksame Durchtrittsquerschnitt für das Reinigungsmittel über die Zeitdauer der Reinigung gesteuert werden. Die vorgenannte Maßnahme kann auch bei der zeit- oder ergebnisabhängigen Umsteuerung angewendet werden.

Das vorgeschlagene Verfahren ist anwendbar auf alle einleitend genannten Steuereinrichtungen, soweit es hierbei um die Anordnung der Einzelverstelleinrichtungen, die vielfältigen Ausführungen der Schließgliedverstellstangen und nicht zuletzt um die Ausführungsformen der Schließglieder geht, wobei letztere beispielsweise beide als Sitzteller oder beide als schieberartig ausgebildete Schließglieder oder wobei der eine als Sitzteller und der andere als Schieber ausgeführt sein können. Die vorgenannten Schließgliedkonfigurationen können dabei in einer Ausführung ohne oder mit Druckausgleichskolben auftreten.

Abhängig von den drei vorgeschlagenen Verfahren wird jeweils ein Doppelsitzventil mit einer Steuereinrichtung vorgeschlagen, wobei letztere sich voneinander unterscheiden. Zur Realisierung der zeitabhängigen Umsteuerung von der Öffnungs- zur Schließbewegung und umgekehrt sind Steuersignale notwendig, die über ein Zeitglied generiert werden. Dieses Zeitglied kann sich in einer außerhalb des Doppelsitzventils befindlichen Hauptsteuerung befinden; es kann aber auch vor Ort, das heißt im oder am Doppelsitzventil angeordnet sein, und es wird erst dann aktiviert, wenn das betreffende Doppelsitzventil zur Sitzreinigung angesteuert wird. Als Folge der ausgelösten Steuersignale führt das jeweilige Schließglied periodisch sich einander ablösende Öffnungs- und Schließbewegungen aus, wobei die Umkehrpunkte der Schließ- und der Öffnungsbewegung in einem bestimmten Abstand von der Sitzfläche bzw. einer gegebenenfalls vorhandenen Hubbegrenzung liegen können. Es sind aber auch Verhältnisse möglich, bei denen die Umkehrpunkte gerade in der Schließ bzw. der Anschlagposition des Schließgliedes liegen oder durch diese zwangsweise festgelegt werden.

Zur Realisierung des vorgeschlagenen Doppelsitzventils mit der Steuereinrichtung, die eine hubabhängige Umsteuerung verwirklicht, sind die Schließgliedverstellstangen jeweils mit einem Stellungsgeber versehen. Dies können beispielsweise Nocken oder Ausnehmungen sein, die mechanisch auf einen der jeweiligen Schließgliedverstellstange zugeordneten Stellungsnehmer einwirken. Dies können aber auch elektrisch-induktiv wirkende Stellungsgeber sein. Als Stellungsnehmer bieten sich andererseits beispielsweise elektrische, pneumatische oder hydraulische Schalter an, die, wie vorstehend bereits angegeben, beispielsweise mechanisch oder elektrisch-induktiv beaufschlagt werden. Weiterhin ist nun bei der Steuereinrichtung vorgesehen, daß der Stellungsnehmer entweder Mittel zur Handhabung von Antriebsenergie für die der Schließgliedverstellstange zugeordnete Einzelverstelleinrichtung ansteuert oder die Handhabung direkt steuert. Üblicherweise sind derartige Mittel elektrisch, pneumatisch oder hydraulisch ansteuerbare Stellventile, mit denen das Druckmittel, vorzugweise Pressluft, der Einzelverstelleinrichtung zugeführt oder aus dieser fortgeführt wird.

Es liegt auf der Hand, daß die im Rahmen der vorliegenden Erfindung als vorteilhaft herausgestellten Ausführungsbeispiele der Doppelsitzventile mit einer Steuereinrichtung zur Durchführung der vorgeschlagenen Verfahren lediglich Beispielcharakter haben. Selbstverständlich sind die Verfahren auch anwendbar auf andere Einzelverstelleinrichtungen, die letztlich dem Zweck dienen, eine wie auch immer geartete Verstellbewegung des Schließgliedes (vorzugsweise translatorisch oder rotativ) über seine Schließgliedverstellstange zu erzeugen. Es kann sich dabei um rein elektromotorische oder auch um hydraulische Antriebe handeln, wobei die Schließbewegung nicht notwendigerweise, wie dies üblich ist, federschließend erfolgt, sondern beispielsweise auch durch die zweite Richtung eines in zwei Richtungen wirkenden Antriebes realisiert werden kann.

Die vorgenannten Verfahren sind auch nicht nur auf die einleitend dargestellten Konfigurationen von Hauptverstelleinrichtung und Einzelverstelleinrichtungen, wie sie im Stand der Technik nachzuweisen sind, beschränkt. Vielmehr sind die Verfahren auch anwendbar auf bislang bei Doppelsitzventilen der einleitend gekennzeichneten Gattung noch nicht angewandte Antriebe, wie sie beispielsweise in der bereits vorstehend genannten EP 0 208 126 B1 beschrieben sind.

Das vorgeschlagene Verfahren mit der hubabhängigen Umsteuerung und das Doppelsitzventil mit einer Steuereinrichtung zu seiner Durchführung werden anhand eines bevorzugten Ausführungsbeispieles in den nachfolgend erläuterten Figuren der Zeichnung im einzelnen näher beschrieben. Es zeigen
- Figur 1: in schematischer Darstellung ein Doppelsitzventil mit einer hubabhängigen Steuereinrichtung mit zwei als Sitzteller ausgebildeten Schließgliedern und in Verbindung mit möglichen Anordnungen von Hauptverstelleinrichtung und Einzelverstelleinrichtungen und
- Figur 2: einen Hub-Zeit-Verlauf h=f(t) eines Schließgliedes, wie er sich bei Anwendung der Steuereinrichtung gemäß Figur 1 beispielsweise darstellt.

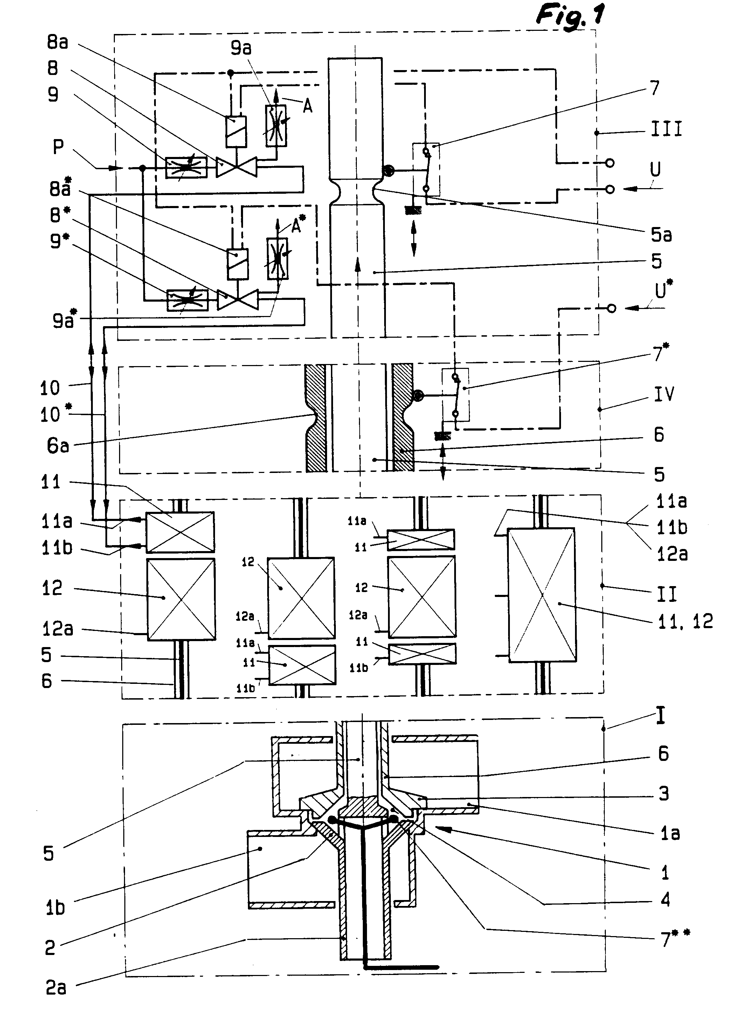

In Figur 1 sind vier das Doppelsitzventil mit der Steuereinrichtung zur Durchführung des vorgeschlagenen Verfahrens kennzeichnende Bereiche I bis IV dargestellt. Der Bereich I beinhaltet das Doppelsitzventil 1 im Bereich seiner Ventilgehäuse 1a und 1b, und zwar in einer vielfach zur Anwendung kommenden Ausführungsform, bei der die Schließglieder 2 und 3 als Sitzteller ausgebildet sind. Letztere bilden in der gezeigten Stellung zwischen sich und den Ventilgehäusen 1a, 1b einen Leckagehohlraum 4, der über ein mit dem untenliegenden Schließglied 2 verbundenes Rohr 2a eine Verbindung zur Umgebung des Doppelsitzventils aufweist. Beide Schließglieder 2 und 3 werden über eine Schließgliedverstellstange 5 bzw. 6 betätigt, die beide nach oben aus dem Ventilgehäuse 1a herausgeführt sind, wobei letztere als Hohlstange ausgebildet ist und erstere konzentrisch umschließt.

Der Bereich II zeigt mogliche Konfigurationen einer Hauptverstelleinrichtung 12 in Verbindung mit Einzelverstelleinrichtungen 11. Es handelt sich, im einzelnen von links nach rechts betrachtet, um eine Antriebskonfiguration, wie sie in der DE-PS 31 08 973, der DE-PS 31 33 273, dem DE-GM 80 03 805 und der EP 02 208 126 dargestellt ist. Mit 11a bzw. 11b ist ein Druckmittelanschluß der Einzelverstelleinrichtung 11 und mit 12a ist ein Druckmittelanschluß der Hauptverstelleinrichtung bezeichnet. In allen Fällen sind die Schließgliedverstellstangen 5 und 6 in die Antriebskonfiguration hineingeführt. Die Einzelverstelleinrichtungen 11 werden über Druckmittelleitungen 10, 10* mit Druckmittel ver- und entsorgt.

Die Bereiche III und IV beinhalten die eigentliche Steuereinrichtung zur Durchführung des vorgeschlagenen Verfahrens, wobei in Bereich IV allein die Erfassung des Hubes der als Hohlstange ausgebildeten Schließgliedverstellstange 6 dargestellt ist. Eine rillenförmige Ausnehmung 6a fungiert dabei als Stellungsgeber, während ein Stellungsmelder 7* als elektrischer Zweipunktschalter ausgeführt ist, der in Hubrichtung verschieblich angeordnet ist. Der Bereich IV wird beim real ausgeführten Doppelsitzventil dort zu finden sein, wo die als Hohlstange ausgebildete Schließgliedverstellstange 6 zum Zwecke ihrer Huberfassung zugänglich ist.

Im Bereich III wird der Hub der Schließgliedverstellstange 5 in gleicher Weise, wie dies vorstehend anhand des Bereichs IV bereits dargestellt wurde, über einen weiteren Stellungsgeber 5a und einen Stellungsmelder 7 erfaßt. Der erste und der zweite Stellungsmelder 7 bzw. 7* werden von einem Steuermittel U bzw. U* beaufschlagt, welches in der Regel als Gleich- oder Wechselspannung zur Verfügung steht. Mit dem vorgenannten Steuermittel werden Mittel 8, 8a bzw. 8*, 8a* zur Handhabung von Antriebsenergie für die der Schließgliedverstellstange 5 bzw. 6 zugeordnete Einzelverstelleinrichtung 11 wahlweise angesteuert. Bei den vorgenannten Mitteln handelt es sich in der Regel um elektrisch betätigbare Stellventile für Druckmittel, insbesondere für Preßluft, wobei die elektrischen Antriebe mit 8a bzw. 8a* und die Stellventile mit 8 bzw. 8* bezeichnet sind. Die Druckmittelversorgung ist mit P gekennzeichnet; das Druckmittel selbst wird dem Stellventil 8 bzw. 8* über eine verstellbare Drossel 9 bzw. 9* zugeführt und über eine ebensolche Drossel 9a bzw. 9a* aus diesem in die Umgebung A bzw. A* abgeführt. Die Stellventile 8 bzw. 8* schalten die Druckmittelleitung 10 bzw. 10* zu den Einzelverstelleinrichtungen 11.

Im Bereich I erkennt man an einer Stelle, in Strömungsrichtung gesehen, hinter dem zu reinigenden Ventilsitz - im Ausführungsbeispiel ist dies der Leckagehohlraum 4 - einen auf den Reinigungsmittelfluß ansprechenden Signalgeber 7**, welcher Steuersignale liefert, die geeignet sind, den Antrieb 8a oder 8a* des Stellventils 8 bzw. 8* anzusteuern.

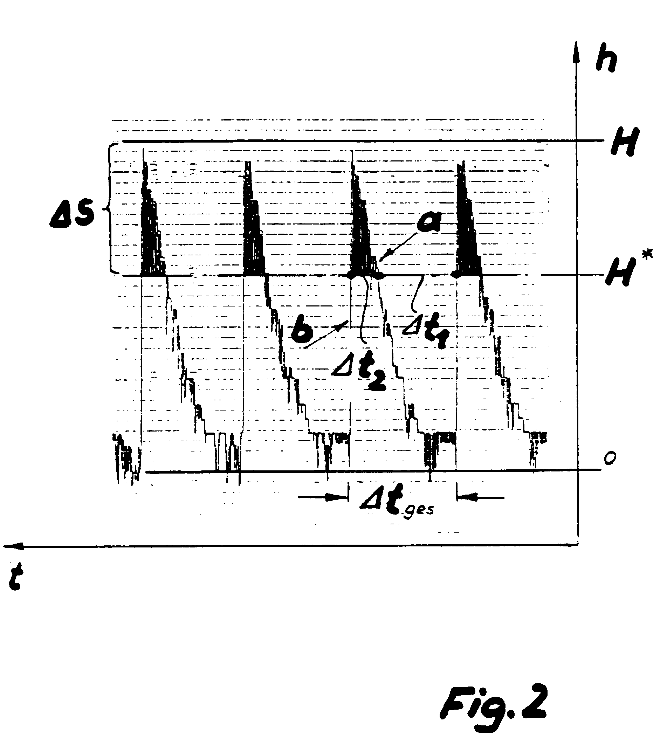

Die Wirkungsweise der Steuereinrichtung soll in Verbindung mit dem Hub-Zeit-Verlauf h=f(t) gemäß Figur 2 erläutert werden. Der Stellungsmelder 7 wird beispielsweise in Hubrichtung derart positioniert, daß sich ein in Figur 2 mit H gekennzeichneter größter Teilhub einstellt. Der zeitliche Verlauf des Öffnungshubes trägt die Bezeichnung a, jener des schließhubes die Bezeichnung b. Die Gesamtzeit eines Schaltintervalles ist mit Δt_{ges} bezeichnet. Es sei an dieser Stelle angemerkt, daß der größte Teilhub H in diesem Falle unter Verzicht auf jegliche mechanische Hubbegrenzung sichergestellt ist. Wird nun die Schließgliedverstellstange 5 so weit nach oben verfahren, daß der als ringförmige Nut ausgebildete Stellungsgeber 5a den Stellungsmelder 7 betätigt, so wird die Ansteuerung des Antriebes 8a des Stellventils 8 unterbrochen, letzteres öffnet die Druckmittelleitung 10 zur Umgebung A hin, und das Druckmittel kann aus der Einzelverstelleinrichtung 11 abströmen. Die Schließgliedverstellstange 5 und das mit ihr verbundene Schließglied 2 bewegen sich nunmehr abwärts. Sobald im Zuge der Abwärtsbewegung der Stellungsgeber 5a den Einwirkungsbereich des Stellungsmelders 7 verläßt, steuert letzterer wieder den Antrieb 8a an, und Druckmittel kann aus der Druckmittelversorgung P über das Stellventil 8 der Einzelverstelleinrichtung 11 auf dem Weg über die Druckmittelleitung 10 erneut zuströmen. Die Schließbewegung kommt zum Stillstand, das Schließglied 2 befindet sich entweder auf oder in der Nähe seiner Sitzfläche, und es erfolgt eine Richtungsumkehr und anschließend eine erneute Öffnungsbewegung des Schließgliedes 2. Sowohl die Druckmittelzufuhr als auch die -abfuhr in bzw. aus der Einzelverstelleinrichtung 11 kann durch die verstellbare Drossel 9 bzw. 9a beeinflußt werden. Dadurch gelingt es, die Steigung des Öffnungshubes a bzw. des Schließhubes b im Hub-Zeit-Verlauf zu beeinflussen. Die Steigung kann auch durch nicht dargestellte und bezeichnete, das Volumen der Einzelverstelleinrichtungen 11 vergrößernde zusätzliche Speichereinrichtungen beeinflußt werde. Ob das Schließglied 2 am Ende seines Schließhubes auf der zugeordneten Sitzfläche zur metallischen Anlage kommt hängt im wesentlichen von den gewählten Parametern ab, die den periodischen Verlauf sich einander ablösenden Öffnungs- und Schließbewegungen zeitlich bestimmen. Im dargestellten Falle kommt es, wie Figur 2 zeigt, kurzzeitig zum metallischen Kontakt zwischen Schließglied 2 und dem zugeordneten Ventilsitz, da der Schließhub b die mit null gekennzeichnete Linie erreicht. Mit H* ist in Figur 2 der Vorhub des Schließgliedes 2 bis zum Abheben der Sitzdichtung vom zugeordneten Ventilsitz bezeichnet. Dies bedeutet, daß erst von hier ab beim weiteren Öffnungshub ein Durchtrittsquerschnitt für das Reinigungsmittel bereitsteht. Die Spanne für den effektiv wirksamen Öffnungshub beträgt im vorliegenden Falle Δs = H-H*. Uber die Zeitdauer Δt₁ bleibt, wie dies Figur 2 ebenfalls zeigt, der Sitzbereich für den Durchtritt von Reinigungsmittel gesperrt, während über die Zeitdauer Δt₂ eine Sitzreinigung mit sich stetig anderndem Durchtrittsquerschnitt, von null beginnend, bis zu einem Maximum ansteigend und wieder auf null absinkend, wirksam wird. Die mit einem derartigen Sitzreinigungsverfahren erreichbaren Vorteile wurden einleitend bereits ausführlich diskutiert.

Es wird anhand des Verlaufs gemäß Figur 2 auch in besonderer Weise deutlich, daß im Bereich zwischen den effektiv wirksamen Öffnungsintervallen weitere Öffnungsintervalle anderer, zeitgleich ebenfalls dem vorgeschlagenen Sitzreinigungsverfahren unterworfenen Doppelsitzventile statistisch plaziert werden können, ohne daß die zur Verfügung zu stellende Reinigungsleistung linear mit der Anzahl der zur Sitzreinigung anstehenden Ventile ansteigen muß. Werden die Stellventile 8 oder 8* abhängig vom Reinigungsmittelfluß, in Strömungsrichtung gesehen, an einer Stelle hinter dem zu reinigenden Ventilsitz mittels eines auf den Reinigungsmittelfluß ansprechenden Signalgebers 7** angesteuert, so wird die Erfassung des jeweiligen Schließgliedhubes auf dem Weg über den Stellungsgeber 5a bzw. 6a in Verbindung mit dem Stellungsmelder 7 bzw. 7* überflüssig. Sobald infolge effektiver Öffnung des Durchtrittsspaltes zwischen Schließglied 2 bzw. 3 und dem zugeordneten Ventilsitz ein Reinigungsmittelfluß zustande kommt, erfolgt über ein daraus resultierendes Signal des Signalgebers 7** eine Umsteuerung von der Öffnungs- zur Schließbewegung. Die Unterbrechung des Reinigungsmittelflusses im Zuge der Fortführung der Schließbewegung ergibt nun wiederum ein den Vorgang umkehrendes Signal, so daß die Abfolge periodisch sich einander ablösenden Öffnungs- und Schließbewegungen sichergestellt ist.

Um zum einen zu verhindern, daß beim Ausfall oder Defekt der Steuereinrichtung das Doppelsitzventil im Zuge der Sitzreinigung in seine volle Offenstellung überführt wird, ist jede Einzelverstelleinrichtung 11 mit einem in der Zeichnung nicht dargestellten mechanischen Anschlag versehen, der den möglichen Einzelhub der jeweiligen Einzelverstelleinrichtung 11 auf ein Maß begrenzt, welches größer ist als der effektive Öffnungshub H bei der jeweiligen Sitzreinigung. Dieser Anschlag ist zum anderen aber auch geeignet, den planmäßigen effektiven Öffnungshub H im Rahmen des vorgeschlagenen Verfahrens durch Anfahren der Einzelverstelleinrichtung an diesen Anschlag zu realisieren.

## Patentansprüche

1. Verfahren zur Sitzreinigung von Doppelsitzventilen mit zwei unabhängig voneinander bewegbaren Schließgliedern (2,3), die zum einen in eine im geöffneten Zustand des Doppelsitzventils (1) gleichzeitig gegebene beiderseitige volle Offenstellung verschiebbar sind und von denen zum anderen wenigstens eines in eine vom jeweils anderen Schließglied (3 bzw. 2) unabhängige Teiloffenstellung verbringbar ist, in der ein gegenüber einem in der Offenstellung vorliegenden Durchtrittsquerschnitt zwischen dem Schließglied (2 bzw. 3) und seinem zugeordneten Sitz verminderter Durchtrittsquerschnitt gebildet wird, **dadurch gekennzeichnet,** daß die jeweilige Teiloffenstellung durch periodisch sich einander ablösende Öffnungs-und Schließbewegungen des Schließgliedes (2,3) erreicht wird, wobei im Zuge des Sitzreinigungsverfahrens eine zeitabhängige Umsteuerung der Teilhubbewegungen der Schließglieder (2,3) von der Öffnungs- zur Schließbewegung und umgekehrt erfolgt und die Steuersignale für die Umsteuerung entweder durch eine außerhalb des Doppelsitzventils (1) angesteuerte Hauptsteuerung oder durch eine im oder am Doppelsitzventil angeordnete, allein diesem zugeordnete Steuerung generiert werden.

2. Verfahren zur Sitzreinigung von Doppelsitzventilen mit zwei unabhängig voneinander bewegbaren Schließgliedern (2,3), die zum einen in eine im geöffneten Zustand des Doppelsitzventils (1) gleichzeitig gegebene beiderseitige volle Offenstellung verschiebbar sind und von denen zum anderen wenigstens eines in eine vom jeweils anderen Schließglied (3 bzw. 2) unabhängige Teiloffenstellung verbringbar ist, in der ein gegenüber einem in der Offenstellung vorliegenden Durchtrittsquerschnitt zwischen dem Schließglied (2 bzw. 3) und seinem zugeordneten Sitz verminderter Durchtrittsquerschnitt gebildet wird, **dadurch gekennzeichnet,** daß die jeweilige Teiloffenstellung durch periodisch sich einander ablösende Öffnungs - und Schließbewegungen des Schließgliedes (2,3) erreicht wird, wobei im Zuge des Sitzreinigungsverfahrens eine hubabhängige Umsteuerung der Teilhubbewegungen der Schließglieder (2,3) von der Öffnungs- zur Schließbewegung und umgekehrt erfolgt und die Steuersignale für die Umsteuerung entweder unmittelbar aus einem Hub-Zeit-Verlauf oder mittelbar aus einem letzterem entsprechenden Verlauf einer erfaßbaren pysikalischen Größe, beispielsweise dem Druck des Druckmittels für die Einzelverstelleinrichtungen (11) zur Erzeugung der Teiloffenstellungen, abgeleitet werden.

3. Verfahren zur Sitzreinigung von Doppelsitzventilen mit zwei unabhängig voneinander bewegbaren Schließgliedern (2,3), die zum einen in eine im geöffneten Zustand des Doppelsitzventils (1) gleichzeitig gegebene beiderseitige volle Offenstellung verschiebbar sind und von denen zum anderen wenigstens eines in eine vom jeweils anderen Schließglied (3 bzw. 2) unabhängige Teiloffenstellung verbringbar ist, in der ein gegenüber einem in der Offenstellung vorliegenden Durchtrittsquerschnitt zwischen dem Schließglied (2 bzw. 3) und seinem zugeordneten Sitz verminderter Durchtrittsquerschnitt gebildet wird, **dadurch gekennzeichnet,** daß die jeweilige Teiloffenstellung durch periodisch sich einander ablösende Öffnungs-und Schließbewegungen des Schließgliedes (2,3) erreicht wird, wobei im Zuge des Sitzreinigungsverfahrens eine ergebnisabhängige Umsteuerung der Teilhubbewegungen der Schließglieder (2,3) von der Öffnungs- zur Schließbewegung und umgekehrt erfolgt und die Steuersignale für die Umsteuerung abhängig vom Reinigungsmittelfluß generiert werden, und zwar, in Strömungsrichtung gesehen, an einer Stelle hinter dem zu reinigenden Ventilsitz.

4. Verfahren nach Anspruch 2, **dadurch gekennzeichnet,** daß der Hub-Zeit-Verlauf der Öffnungs- und Schließbewegung wahlweise und unabhängig voneinander eingestellt wird.

5. Doppelsitzventil mit einer Steuereinrichtung zur Durchführung des Verfahrens nach Anspruch 1 , mit zwei voneinander unabhängigen, relativ zueinander bewegbaren Schließgliedern (2,3), die jeweils einem Ventilsitz zugeordnet sind und zwischen zwei benachbarten Ventilgehäusen (1a,1b) eine Doppelabdichtung schaffen und die über Schließgliedverstellstangen (5,6) mittels einer Hauptverstelleinrichtung (12) in die volle Offenstellung und mittels Einzelverstelleinrichtungen (11) in die jeweilige Teiloffenstellung gelangen, und mit einem sowohl in der Schließ- als auch in der Offenstellung des Doppelsitzventils (1) zwischen den Schließgliedern (2,3) eingeschlossenen Leckagehohlraum (4), der eine Verbindung zur Umgebung des Doppelsitzventils (1) aufweist, **dadurch gekennzeichnet,** daß ein Zeitglied vorgesehen ist, mittels dessen Steuersignale generiert werden, deren Frequenz einstellbar ist und die Mittel (8,8a; 8*,8a*) zur Handhabung von Antriebsenergie für die der Schließgliedverstellstange (5 bzw. 6) zugeordnete Einzelverstelleinrichtung (11) wahlweise ansteuern.

6. Doppelsitzventil mit einer Steuereinrichtung zur Durchführung des Verfahrens nach Anspruch 2 oder 4, mit zwei voneinander unabhängigen, relativ zueinander bewegbaren Schließgliedern (2,3), die jeweils einem Ventilsitz zugeordnet sind und zwischen zwei benachbarten Ventilgehäusen (1a,1b) eine Doppelabdichtung schaffen und die über Schließgliedverstellstangen (5,6) mittels einer Hauptverstelleinrichtung (12) in die volle Offenstellung und mittels Einzelverstelleinrichtungen (11) in die jeweilige Teiloffenstellung gelangen, und mit einem sowohl in der Schließ- als auch in der Offenstellung des Doppelsitzventils (1) zwischen den Schließgliedern (2,3) eingeschlossenen Leckagehohlraum (4), der eine Verbindung zur Umgebung des Doppelsitzventils (1) aufweist, **dadurch gekennzeichnet,** daß die Schließgliedverstellstangen (5,6) jeweils mit einem Stellungsgeber (5a bzw. 6a) versehen sind, dem jeweils ein in Hubrichtung ver schieblich angeordneter Stellungsnehmer (7 bzw. 7*) zugeordnet ist, und daß letzterer entweder Mittel (8,8a; 8*,8a*) zur Handhabung von Antriebsenergie für die der Schließgliedverstellstange (5 bzw. 6) zugeordnete Ein zelverstelleinrichtung (11) ansteuert oder die Handhabung direkt steuert.

7. Doppelsitzventil mit einer Steuereinrichtung nach Anspruch 6, **dadurch gekennzeichnet,** daß der Stellungsnehmer (7 bzw. 7*) als elektrischer, pneumatischer oder hydraulischer Schalter ausgebildet ist.

8. Doppelsitzventil mit einer Steuereinrichtung zur Durchführung des Verfahrens nach Anspruch 3, mit zwei voneinander unabhängigen, relativ zueinander bewegbaren Schließgliedern (2,3), die jeweils einem Ventilsitz zugeordnet sind und zwischen zwei benachbarten Ventilgehäusen (1a,1b) eine Doppelabdichtung schaffen und die über Schließgliedverstellstangen (5,6) mittels einer Hauptverstelleinrichtung (12) in die volle Offenstellung und mittels Einzelverstelleinrichtungen (11) in die jeweilige Teiloffenstellung gelangen, und mit einem sowohl in der Schließ- als auch in der Offenstellung des Doppelsitzventils (1) zwischen den Schließgliedern (2,3) eingeschlossenen Leckagehohlraum (4), der eine Verbindung zur Umgebung des Doppelsitzventils (1) aufweist, **dadurch gekennzeichnet,** daß ein auf den Reinigungsmittelfluß ansprechender Signalgeber (7**) vorgesehen ist, der die Mittel (8,8a; 8*,8a*) zur Handhabung von Antriebsenergie für die der Schließgliedverstellstange (5 bzw. 6) zugeordnete Einzelverstelleinrichtung (11) wahlweise ansteuert.

9. Doppelsitzventil mit einer Steuereinrichtung nach einem der Ansprüche 5 bis 8, **dadurch gekennzeichnet,** daß die Mittel (8,8a; 8*,8a*) als elektrisch, pneumatisch oder hydraulisch betätigbare Stellventile für Druckmittel ausgeführt sind.

10. Doppelsitzventil mit einer Steuereinrichtung nach einem der Ansprüche 5 bis 9, **dadurch gekennzeichnet,** daß der maximal mögliche Teilhub der Einzelverstelleinrichtungen (11) durch eine mechanische Hubbegrenzung vorgegeben 5 ist.

## Claims

1. Process for cleaning the seats of double-seated valves with two mutually independent closing members which can be taken into a fully open position of the double-seated valve (1) on both sides, and of which at least one closing member (3 or 2) can be taken into an independent partly open position in which a smaller passage cross-section than the passage cross-section between the closing member (2 or 3) and its allocated seat in the open position is created, **characterized in that** the respective partly open position is attained by opening and closing movements of the closing member (2, 3) which periodically follow the other, whereby during the cleaning of the seats, the changeover of the partial stroke movement of the closing members (2, 3) from the opening to the closing movement and vice versa is dependent upon time, and the control signals for the changeover are either generated by selection of a main control outside the double-seated valve (1) or by a control arranged at or inside and only allocated to the double-seated valve.

2. Process for cleaning the seats of double-seated valves with two mutually independent closing members which can be taken into a fully open position of the double-seated valve (1) on both sides, and of which at least one closing member (3 or 2) can be taken into an independent partly open position in which a smaller passage cross-section than the passage cross-section between the closing member (2 or 3) and its allocated seat in the open position is created, **characterized in that** the respective partly open position is attained by opening and closing movements of the closing member (2, 3) which periodically follow each other, whereby during the cleaning of the seats, the changeover of the partial stroke movement of the closing members (2, 3) is dependent upon stroke, and the control signals for the changeover are either derived from the course of stroke and time or indirectly from the course corresponding to the latter of a determinable physical value, e.g. the pressure of the pressure medium for the single adjusters (11) for generation of the partly open positions.

3. Process for cleaning the seats of double-seated valves with two mutually independent closing members which can be taken into a fully open position of the double-seated valve (1) on both sides, and of which at least one closing member (3 or 2) can be taken into an independent partly open position in which a smaller passage cross-section than the passage cross-section between the closing member (2 or 3) and its allocated seat in the open position is created, **characterized in that** the respective partly open position is attained by opening and closing movements of the closing member (2, 3) which periodically follow each other, whereby during the cleaning of the seats, the changeover of the partly stroke movement of the closing members (2, 3) from the opening to the closing movement and vice versa is dependent upon result, and the control signals for the changeover are generated depending upon the flow of detergent, seen in flow direction at a point after the valve-seat to be cleaned.

4. Process according to Claim 2, **characterized in** **that** the course of stroke and time of the opening and closing movement is adjusted optionally and independently from each other.

5. Double-seated valve with a control device for implementation of the process according to Claim 1, with two mutually independent closing members (2, 3) movable relatively to each other, allocated to one valve seat each and creating a double sealing between two adjacent valve housings (1a, 1b), and that attain the fully open position over closing member actuating rods (5, 6) by means of a main adjuster (12), and the respective partly open position by means of single adjusters (11), and with a leakage cavity (4) enclosed between the closing members (2, 3) in the closed position as well es in the open position of the double-seated valve (1), comprising a connection to the environment of the double-seated valve (1), **characterized in that** a time device is provided by means of which control signals are generated, the frequency of which is adjustable, and which optionally selects devices (8, 8a, 8*, 8a*) to handle driving power for the single adjuster (11) allocated to the closing device actuating rod (5 or 6).

6. Double-seated valve with a control device for implementing the process according to Claim 2 or 4, with two mutually independent closing members (2, 3) moveable relatively to each other that are allocated to a valve seat each and create a double sealing between two adjacent valve housings (1a, 1b), and that can be taken into the fully open position over closing member actuating rods (5, 6) by means of a main adjuster (12), and into the respective partly open position by means of single adjusters (11), and with a leakage cavity (4) enclosed between the closing members (2, 3) in the closed position as well as in the open position of the double-seated valve (1) comprising a connection to the environment of the double-seated valve (1), **characterized in that** the closing device actuating rods (5, 6) have a position transmitter (5a, 6a) each, to which a position detector (7 or 7*) moveable in the direction of the stroke is allocated, and that the latter either controls devices (8, 8a; 8*, 8a*) to handle driving power for the single adjuster (11) allocated to the closing device actuating rod (5 or 6) or directly controls the manipulation.

7. Double-seated valve with a control device according to Claim 6, **characterized in that** the position detector (7 or 7*) is designed as an electric, pneumatic or hydraulic switch.

8. Double-seated valve with a control device for implementing the process according to Claim 3, with two mutually independent closing members (2, 3) moveable relatively to each other, allocated to a valve seat each and creating a double sealing between two adjacent valve housings (la, 1b), and that can be taken into the fully open position over closing member actuating rods (5, 6) by means of a main adjuster (12) and into the respective partly open position by means of single adjusters (11), and comprising a leakage cavity (4) enclosed between the closing members (2, 3) in the closed position as well as in the open position of the double-seated valve (1) comprising a connection to the environment of the double-seated valve (1), **characterized in that** a signal generator (7**) responding to the detergent flow is provided that optionally selects the devices (8, 8a; 8*, 8a*) to handle driving power for the single adjuster (11) allocated to the closing device actuating rod (5 or 6).

9. Double-seated valve with a control device according to one of Claims 5 to 8, **characterized** **in that** the devices (8, 8a; 8*, 8a*) are designed as electronically, pneumatically or hydraulically operated adjusting valves for pressure media.

10. Double-seated valve with a control device according to one of Claims 5 to 9, **characterized** **in that** the maximum possible partial stroke of the single adjusters (11) is given by a mechanical stroke limite.

## Revendications

1. Procédé de nettoyage des sièges de soupapes à double siège comprenant deux organes fe fermeture (2, 3) mobiles indépendamment l'un de l'autre, qui d'une part sont déplaçables jusqu'à une position d'ouverture complète des deux côtés donnée simultanément lorsque la soupape à double siège est à l'état ouvert, et dont, d'autre part, l'un au moins peut être amené dans une position d'ouverture partielle indépendante de l'autre organe de fermeture (3 ou 2) respectif, position dans laquelle est formée, entre l'organe de fermeture (2 ou 3) et le siège correspondant, une section de passage qui est réduite par rapport à une section de passage qui existe en position ouverte,
caractérisé en ce que chaque position d'ouverture partielle est atteinte par des mouvements d'ouverture et de fermeture de l'organe de fermeture (2, 3), se succédant l'un à l'autre périodiquement,
de telle façon qu'un changement sens des mouvements de course partielle des organes de fermeture (2, 3), du mouvement d'ouverture au mouvement de fermeture, et vice versa, qui dépend du temps, se produit pendant le processus de nettoyage des sièges,
et que les signaux de commande de changement de sens sont émis soit par une commande principale commandée extérieurement à la soupape à double siège (1), soit par une commande qui est placée dans la soupape à double siège ou sur elle, et lui est exclusivement affectée.

2. Procédé de nettoyage des sièges de soupapes à double siège comprenant deux organes (2, 3) mobiles indépendamment l'un de l'autre, qui d'une part sont déplaçables jusqu'à une position d'ouverture complète des deux côtés donnée simultanément lorsque la soupape à double siège est à l'état ouvert, et dont, d'autre part, l'un au moins peut être amené dans une position d'ouverture partielle indépendante de l'autre organe de fermeture (3 ou 2) respectif, position dans laquelle est formée, entre l'organe de fermeture (2 ou 3) et le siège correspondant, une section de passage qui est réduite par rapport à une section de passage qui existe en position ouverte,
caractérisé en ce que chaque position d'ouverture partielle est atteinte par des mouvements d'ouverture et de fermeture de l'organe de fermeture (2, 3), se succédant l'un à l'autre périodiquement,
de telle façon qu'un changement sens des mouvements de course partielle des organes de fermeture (2, 3), du mouvement d'ouverture au mouvement de fermeture, et vice versa, qui dépend du temps, se produit pendant le processus de nettoyage des sièges,
et que les signaux de commande de changement de sens proviennent soit directement d'un diagramme temps-course, soit indirectement du diagramme, correspondant à ce dernier, d'une grandeur physique détectable, par exemple la pression du moyen de pression pour les dispositifs de déplacement indépendant (11) destinés à créer les positions d'ouverture partielle.

3. Procédé de nettoyage des sièges de soupapes à double siège comprenant deux organes (2, 3) mobiles indépendamment l'un de l'autre, qui d'une part sont déplaçables jusqu'à une position d'ouverture complète des deux côtés donnée simultanément lorsque la soupape à double siège est à l'état ouvert, et dont, d'autre part, l'un au moins peut être amené dans une position d'ouverture partielle indépendante de l'autre organe de fermeture (3 ou 2) respectif, position dans laquelle est formée, entre l'organe de fermeture (2 ou 3) et le siège correspondant, une section de passage qui est réduite par rapport à une section de passage qui existe en position ouverte,
caractérisé en ce que chaque position d'ouverture partielle est atteinte par des mouvements d'ouverture et de fermeture de l'organe de fermeture (2, 3), se succédant l'un à l'autre périodiquement,
de telle façon qu'un changement sens des mouvements de course partielle des organes de fermeture (2, 3), du mouvement d'ouverture au mouvement de fermeture, et vice versa, qui dépend du temps, se produit pendant le processus de nettoyage des sièges,
et que les signaux de commande de changement de sens sont émis en fonction du débit du produit de nettoyage et ce, à un endroit situé derrière le siège de soupape à nettoyer, dans le sens de l'écoulement.

4. Procédé selon la revendication 2, caractérisé en ce que les diagrammes temps-course du mouvement d'ouverture et du mouvement de fermeture sont fixés à volonté et indépendamment l'un de l'autre.

5. Soupape à double siège munie d'un dispositif de commande, destinée à la mise en oeuvre du procédé selon la revendication 1,
comprenant deux organes de fermeture (2, 3) indépendants l'un de l'autre et mobiles l'un par rapport à l'autre, qui sont respectivement associés à un siège de soupape formant entre deux logements de soupape (1a, 1b) adjacents, une étanchéité double, et qui, grâce à des barres de placement (5,6) des organes de fermeture, parviennent à la position d'ouverture complète sous l'effet d'un dispositif de commande principal (12), et à la position d'ouverture partielle respective au moyen de dispositifs de commande individuelle (11),
et présente une cavité de fuite (4) incluse entre les organes de fermeture (2, 3) aussi bien dans la position de fermeture que dans la position d'ouverture de la soupape à double siège (1), cette cavité présentant un raccordement à l'environnement de la soupape à double siège (1), caractérisée en ce qu'un relais de temporisation est prévu, au moyen duquel sont émis des signaux de commande dont la fréquence est réglable et qui commandent à volonté les moyens (8, 8a ; 8*, 8a*) pour le contrôle de l'énergie d'entraînement destinée au dispositif de commande individuelle (11) associé à la barre de déplacement des organes de fermeture (5 et/ou 6).

6. Soupape à double siège munie d'un dispositif de commande, destinée à la mise en oeuvre du procédé selon la revendication 2 ou 4, comprenant deux organes de fermeture (2, 3) indépendants l'un de l'autre et mobiles l'un par rapport à l'autre, qui sont respectivement associés à un siège de soupape forment entre deux logements de soupape (1a, 1b) adjacents une étanchéité double, et qui, grâce à des barres de placement (5,6) des organes de fermeture, parviennent à la position d'ouverture complète sous l'effet d'un dispositif de commande principal (12), et à la position d'ouverture partielle respective au moyen de dispositifs de commande individuelle (11),
et présente une cavité de fuite (4) incluse entre les organes de fermeture (2, 3) aussi bien dans la position de fermeture que dans la position d'ouverture de la soupape à double siège (1), cette cavité présentant un raccordement à l'environnement de la soupape à double siège (1), caractérisée en ce que les barres de déplacement des organes de fermeture (5, 6) sont munies chacune d'un capteur de position (5a ou 6a), auquel est respectivement affecté un récepteur de position (7 ou 7*) déplaçable dans le sens de la course,
et en ce que ce dernier dirige des moyens (8, 8a ; 8*, 8a*) pour le contrôle de l'énergie d'entraînement destinée au dispositif de commande indépendante (11) associé à la barre de déplacement de l'organe de fermeture (5 ou 6) ou agit directement sur ce contrôle.

7. Soupape à double siège munie d'un dispositif de commande selon la revendication 6, caractérisée en ce que le récepteur de position (7 ou 7*) est conçu comme un commutateur électrique, pneumatique ou hydraulique.

8. Soupape à double siège munie d'un dispositif de commande destinée à la mise en oeuvre du procédé selon la revendication 3, comprenant deux organes de fermeture (2, 3) indépendants l'un de l'autre et mobiles l'un par rapport à l'autre, qui sont respectivement associés à un siège de soupape forment entre deux logements de soupape (1a, 1b) adjacents une étanchéité double, et qui, grâce à des barres de placement (5,6) des organes de fermeture, parviennent à la position d'ouverture complète sous l'effet d'un dispositif de commande principal (12), et à la position d'ouverture partielle respective au moyen de dispositifs de commande individuelle (11),
et présente une cavité de fuite (4) incluse entre les organes de fermeture (2, 3) aussi bien dans la position de fermeture que dans la position d'ouverture de la soupape à double siège (1), cette cavité présentant un raccordement à l'environnement de la soupape à double siège (1), caractérisée en ce qu'il est prévu un émetteur de signal (7**) réagissant au débit du produit de nettoyage, qui commande à volonté les moyens (8, 8a ; 8*, 8a*) de contrôle de l'énergie d'entraînement destinée au dispositif de commande indépendant (11) associé à la barre de réglage de l'organe de fermeture (5 ou 6).

9. Soupape à double siège munie d'un dispositif de commande selon l'une des revendications 5 à 8, caractérisée en ce que les moyens (8, 8a ; 8*, 8a*) sont conçus comme des servo-valves à commande électrique, pneumatique ou hydraulique pour un moyen de pression.

10. Soupape à double siège munie d'un dispositif de commande selon l'une des revendications 5 à 9, caractérisée en ce que la course partielle maximale possible des dispositifs de commande indépendante (11) est établie par un limiteur de course mécanique.
